Europäisches Patentamt

European Patent Office

Office européen des brevets

(19)

(11) Numéro de publication : **0 334 689 B1**

(12) # FASCICULE DE BREVET EUROPEEN

(45) Date de publication du fascicule du brevet :
**01.07.92 Bulletin 92/27**

(51) Int. Cl.⁵ : **C04B 35/48,** C04B 35/62, C04B 35/10

(21) Numéro de dépôt : **89400429.0**

(22) Date de dépôt : **16.02.89**

(54) **Pièces céramiques minces obtenues par fusion et moulage d'une composition du système Al2O3-ZrO2-SiO2-K2O.**

(30) Priorité : **19.02.88 FR 8801986**

(43) Date de publication de la demande :
**27.09.89 Bulletin 89/39**

(45) Mention de la délivrance du brevet :
**01.07.92 Bulletin 92/27**

(84) Etats contractants désignés :
**AT BE DE ES FR GB IT SE**

(56) Documents cités :
**CH-A- 282 292**
**GB-A- 805 205**
**US-A- 2 438 552**

(73) Titulaire : **SOCIETE EUROPEENNE DES PRODUITS REFRACTAIRES**
**Les Miroirs 18, Avenue d'Alsace**
**F-92400 Courbevoie (FR)**

(72) Inventeur : **Bert, Christophe**
**10 Allée des Brantes**
**F-84700 Sorgues (FR)**
Inventeur : **Urffer, Daniel**
**5 Rue Paul Signac**
**F-84310 Morières les Avignon (FR)**

(74) Mandataire : **Colas, Jean-Pierre et al**
**Cabinet de Boisse 37, avenue Franklin D. Roosevelt**
**F-75008 Paris (FR)**

EP 0 334 689 B1

## Description

L'invention concerne des pièces céramiques minces obtenues par fusion et moulage d'une composition du système $Al_2O$-$ZrO_2$-$SiO_2$-$K_2O$ ayant de bonnes propriétés de résistance mécanique et de résistance à l'abrasion.

Les matières réfractaires obtenues par fusion et moulage d'une composition à base d'alumine, de zircone et de silice appelée en abrégé "AZS" sont bien connues et largement employées pour la construction de fours verriers sous forme de blocs réfractaires. US-A-2 271 366, 2 438 552, 2 903 373 et FR-A-1 153 488, entre autres, décrivent de telles matières. Ces brevets mentionnent la présence, en plus des constituants principaux que sont l'alumine, la zircone et la silice, d'une petite quantité d'oxyde alcalin qui entre dans la composition de la phase vitreuse liant les phases cristallines de la matière réfractaire. Comme oxyde alcalin, $Na_2O$ et $K_2O$ et leurs mélanges sont les plus couramment cités et sont présentés comme étant équivalents. Dans la pratique industrielle, toutefois, l'emploi de $Na_2O$ est général en raison du moindre coût et de la plus grande disponibilité des sources de $Na_2O$ (le carbonate de sodium étant la source habituelle).

Outre les applications purement réfractaires, au contact du verre fondu en particulier, il est apparu que les produits fondus et moulés du système $Al_2O$-$ZrO_2$-$SiO_2$-$Na_2O$, présentent d'intéressantes propriétés pour des applications anti-abrasion à froid ou à chaud.

En effet, le réseau cristallin corindon-zircone éventuellement associé en eutectique présente une dureté et une ténacité élevées. De plus, la liaison par une phase vitreuse et l'absence de porosité ouverte, caractéristique des oxydes fondus et moulés, apporte à ces produits une cohésion remarquable et très utile dans les applications anti-abrasion.

Il est également apparu que les produits fondus et moulés du système $Al_2O_3$-$ZrO_2$-$SiO_2$-$Na_2O$ ont une excellente résistance à la corrosion vis-à-vis d'une gamme large d'agents agressifs autres que le verre fondu : sels en solutions ou fondus, acides ou bases en solution même concentrée, certains métaux fondus...

Le développement de ces nouveaux types d'application a conduit à réaliser industriellement, à côté des gros blocs réfractaires, des dalles minces pour revêtements anti-abrasion et anti-corrosion en remplacement de métaux (aciers - fontes) ou de matières synthétiques (platiques) ou naturelles (roches taillées).

Les progrès dans le domaine de la fonderie des oxydes ont permis peu à peu de réaliser des pièces de forme plus ou moins complexe permettant de simplifier le montage et de minimiser les joints.

Dans certaines applications, les problèmes d'abrasion sont compliqués par des sollicitations mécaniques externes (chocs, vibrations). Dans d'autres cas la fonction même de la pièce implique ces sollicitations (pièces tournantes dans un milieu abrasif ou corrosif). Dans certaines nouvelles applications, des pièces de structure en oxydes fondus et moulés, sont choisies pour leur inertie chimique, leur faible conductivité thermique ou leur légèreté par rapport aux métaux et sont soumises essentiellement à des contraintes mécaniques ou thermo-mécaniques à l'application.

On conçoit aisément que les défauts de surface (ou de peau) qui ont une importance mineure dans les gros blocs réfractaires soumis essentiellement à la corrosion prennent une importance capitale dans des pièces minces tant pour des questions géométriques (importance relative du défaut par rapport à l'épaisseur), que pour des questions de sollicitations à l'application (risque de rupture mécanique à partir de ces défauts).

La mécanique de la rupture permet de formuler la résistance d'un matériau de la façon suivante :

$$\sigma_R = \frac{Kc}{Y \sqrt{a_c}}$$

avec

$\sigma_R$     = contrainte de rupture (mesurée par exemple par un essai de flexion)

$K_c$     = ténacité à la rupture ou coefficient critique d'intensité de contraintes

$Y$     = facteur géométrique (dépendant de l'échantillon considéré)

$a_c$     = longueur équivalente du défaut critique.

La résistance mécanique est donc :

– proportionnelle à la ténacité à la rupture, qui est une caractéristique intrinsèque du matériau,

– inversement proportionnelle à la racine de la dimension du défaut critique, qui dépend des conditions de fabrication, éventuellement du type de pièce etc...

La ténacité des céramiques est inférieure d'un ordre de grandeur à celle des métaux. Cela signifie que si l'on vise la même résistance mécanique, la taille des défauts admissibles dans une céramique devra être deux ordres de grandeur en dessous de celle des métaux ($10\mu m$ contre 1 mm par exemple).

Une céramique fondue coulée du type AZS n'échappe pas à cette règle. On conçoit donc que la diminution de la taille des défauts soit primordiale si l'on cherche à réaliser des pièces sollicitées mécaniquement.

La résistance des céramiques en traction est beaucoup plus faible qu'en compression, cette caractéristique rend les pièces minces en céramique très sensibles au défaut de surface. Ceux-ci doivent donc faire l'objet d'une attention particulière.

Si l'on observe les principaux défauts des pièces minces fondues moulées en AZS, on peut les regrouper en deux familles :
- des défauts internes de type porosité de retrait,
- des défauts de surface de type fentes de peau.

D'après les remarques précédentes, les défauts critiques doivent être les seconds. Cette hypothèse est corroborée par l'observation de pièces minces fondues moulées usagées, sollicitées mécaniquement en service, qui montre que la rupture brutale ou différée s'amorce presque toujours sur la fissuration de peau.

Une voie visant à améliorer la résistance mécanique des pièces fondues moulées minces est donc la diminution de la fissuration de peau.

L'observation microscopique de la fissuration de peau des pièces minces fondues moulées en AZS montre que cette fissuration se situe toujours dans la phase vitreuse que lie l'enchevêtrement cristallin du produit.

Lors de la solidification d'un tel produit, la phase vitreuse fige en dernier. Tant qu'elle est plastique, le produit peut absorber dans une certaine mesure les contraintes et les déformations. Quand elle est solidifiée, les risques de fissuration sont beaucoup plus grands.

On conçoit donc aisément que la nature de la phase vitreuse ait un rôle essentiel dans la fissuration des produits fondus moulés AZS.

Cette phase vitreuse est constituée habituellement, en poids, de silice ($SiO_2$) pour 70% environ, d'alumine ($Al_2O_3$) pour 25% environ, d'oxyde de sodium ($Na_2O$) pour 5% environ plus des traces d'autres oxydes en solution ($ZrO_2$, $CaO$, $Fe_2O_3$, $TiO_2$).

Dans ce type de produit on appelle en général "traces" les quantités approximativement inférieures à 0,05% en poids.

Les possibilités de modification de la phase vitreuse en vue d'améliorer la fissuration de peau par modification des conditions de solidification paraissent relativement limitées.

Le verre de silice en équilibre avec le corindon est saturé d'alumine, la seule variable possible est l'oxyde alcalin.

La diminution de la proportion de $Na_2O$ se traduit rapidement par l'apparition de mullite avec un cortège de défauts (fissuration, écornage...).

L'augmentation de la proportion de $Na_2O$ semble avoir un rôle légèrement favorable sur la fissuration de peau des pièces minces mais ce jusqu'à un taux assez limité (fissuration au-delà) et avec un effet défavorable sur les propriétés à chaud.

Le remplacement total ou partiel de l'oxyde de sodium par d'autres oxydes alcalins a été exploré par la Demanderesse. Les métaux alcalins du tableau périodique des éléments jusqu'à la 6ème période sont les suivants, par masse atomique croissante :

le lithium (Li), le sodium (Na), le potassium (K), le rubidium (Rb), le césium (Cs).

A partir de la période suivante (Francium), tous les isotopes des éléments considérés sont radioactifs ce qui pose un problème évident.

Parmi les cinq métaux alcalins cités précédemment, certains sont disponibles industriellement sous forme de carbonates sans gros problème (Li, Na, K), d'autres sont beaucoup plus rares et chers (Rb, Cs). Dans un souci de compréhension nous avons cependant retenu l'un d'eux (Cs) dans l'étude faite. Les principales caractéristiques des quatre métaux alcalins étudiés sont rassemblées dans le tableau suivant :

|  | Numéro atomique | Nombre de masse | Energie de 1ère ionisation (eV) | Rayon ionique (Å) |
|---|---|---|---|---|
| Li | 3 | 6,94 | 5,4 | 0,67 |
| Na | 11 | 22,99 | 5,1 | 0,98 |
| K | 19 | 39,10 | 4,3 | 1,33 |
| Cs | 55 | 132,91 | 3,9 | 1,69 |

Ces métaux alcalins peuvent être introduits avantageusement dans la composition d'oxydes à fondre sous forme de carbonates. C'est la méthode que nous avons retenue pour notre étude. Un dégagement gazeux de $CO_2$ se produit lors de la fusion et le métal alcalin se retrouve sous forme d'oxyde dans la phase vitreuse du produit solidifié ($Li_2O$, $Na_2O$, $K_2O$, $Cs_2O$).

La phase vitreuse des produits fondus moulés en AZS peut être considérée comme un réseau silicaté constitué d'anions complexes $SiO_4^{4-}$ et $AlO_4^{5-}$ plus ou moins polymérisés ainsi que d'anions simples $O^{2-}$ et de cations alcalins $Na^+$ dits modificateurs (ou destructeurs) de réseau. La substitution totale ou partielle des ions $Na^+$ par d'autres alcalins doit être réalisée à nombre de moles d'ions identique pour maintenir l'équilibre habituel phase vitreuse/corindon avec absence de mullite. La substitution des ions $Na^+$ par des ions $K^+$ à nombre de moles identiques, entraîne un rapport de conversion de $K_2O/Na_2O = 1,52$. D'après cette règle 1% en masse de $Na_2O$ doit être remplacé par 1,52% de $K_2O$ et, inversement, l'équivalent molaire de 1,52% en masse de $K_2O$ est 1% de $Na_2O$. Par ailleurs, on sait que, dans les produits électrofondus du type alumine-zircone-silice, que le rapport pondéral $Na_2O/SiO_2$ doit être maintenu entre 0,07 et 0,14 pour maintenir un bon équilibre entre les phases avec notamment une absence de mullite. Cette règle s'applique aussi bien aux compositions contenant du $K_2O$ en substitution totale ou partielle de $Na_2O$ en raisonnant en terme de $Na_2O$ équivalent d'après la conversion molaire $K_2O/Na_2O$ sus-définie. Il faut donc que la condition suivante :

$$0,07 \le \text{rapport pondéral } \frac{Na_2O \;+\; \dfrac{K_2O}{1,52}}{SiO_2} \le 0,14$$

soit satisfaite.

Les essais de réalisation de pièces minces fondues moulées en AZS que nous avons réalisés dans ces conditions ont donné des résultats très différents selon la nature de l'oxyde alcalin utilisé.

Le produit de référence en AZS, avec $Na_2O$, montre systématiquement une fine fissuration de peau. Les fissures font typiquement 3 mm de profondeur pour des pièces d'une épaisseur de 10 mm.

Le produit en AZS avec $Li_2O$ laisse apparaître un réseau de fissuration plus serré que le produit de référence. Par contre, les fissures paraissent moins profondes. Au global la résistance mécanique moyenne sur pièces minces est voisine de celle du produit de référence.

Le produit en AZS avec $Cs_2O$ révèle des fentes de peau peu nombreuses mais graves. Là encore, la résistance mécanique moyenne sur pièces minces reste proche de celle du produit de référence.

De façon surprenante nous avons trouvé que la composition en AZS avec $K_2O$ conduit à des pièces minces fondues et moulées quasiment exemptes de fentes de peau. La résistance mécanique en flexion sur pièces minces est considérablement améliorée (de 50 à 140%) et divers essais ont permis de confirmer que la qualité de peau est particulièrement saine.

La présente invention concerne, donc, des pièces en matériau céramique mise en forme par fusion et moulage d'une composition à base d'alumine, de zircone, de silice et d'un oxyde de métal alcalin, ladite pièce étant formée de phases cristallines de corindon et de zircone et d'une phase vitreuse, présentant, sur au moins une de ses parties, une épaisseur inférieure ou égale à 30 mm et étant destinée à une application où la résistance mécanique et/ou la résistance à l'abrasion ont une importance primordiale, caractérisée en ce qu'elle a la composition chimique suivante, en % en poids sur la base des oxydes :

| | | | | |
|---|---|---|---|---|
| $Al_2O_3$ | : | 40 | — | 75 |
| $ZrO_2$ | : | 20 | — | 45 |
| $SiO_2$ | : | 5 | — | 20 |
| $Na_2O$ | : | 0 | — | 2,7 |
| $K_2O$ | : | 0,15 | — | 4,25 |
| $Fe_2O_3+TiO_2+CaO+MgO$ | : | 0 | — | 0,3 , |

le rapport pondéral

$$\frac{Na_2O \;+\; K_2O/1,52}{SiO_2}$$

étant compris entre 0,07 et 0,14 inclusivement, et en ce que la zircone est principalement sous forme monoclinique du coeur jusqu'à la peau.

La somme de $Fe_2O_3$, $TiO_2$, $CaO$ et $MgO$ ne doit pas excéder 0,3% en poids car la présence d'une quantité plus importante de ces impuretés dégrade les propriétés de la pièce. De préférence la proportion de $Na_2O$ est

de 0 à 1,20% en poids et la proportion de $K_2O$ est 0,25 à 2% pour l'obtention des meilleures propriétés.

Les pièces de l'invention sont particulièrement utiles dans des applications où la résistance mécanique et/ou la résistance à l'abrasion présentent une importance primordiale. Par exemple, elles sont utiles, à titre non limitatif, comme disques de microniseur, pièces d'usure de pompes pour liquides chargés, revêtements anti-abrasifs, etc.

Si l'ion potassium joue un rôle favorable lors de la solidification en peau des compositions AZS, nous avons pensé que cela devait se voir sur d'autres points que la fissuration de peau.

Nous avons donc réalisé des études fines par diffraction de rayons X pour mettre en évidence les phases cristallographiques en présence depuis le coeur jusqu'à la peau des produits solidifiés en pièces minces.

Pour le produit de référence AZS avec $Na_2O$, les phases cristallographiques en coeur d'une pièces de 8 mm d'épaisseur sont le corindon, la zircone monoclinique et la phase vitreuse. On retrouve le même résultat jusqu'à 1 mm environ de la peau. A ce stade et jusqu'en peau on voit apparaître de la zircone tétragonale de façon plus marquée que la zircone monoclinique.

Le même type de cristallisation est observé sur les produits fondus moulés en pièces minces de composition AZS avec $Li_2O$ et AZS avec $Cs_2O$ ; le produit AZS avec $K_2O$ constitue une exception. On trouve en effet sur le produit AZS avec $K_2O$ le corindon, la zircone monoclinique et la phase vitreuse depuis le coeur jusqu'à la peau du produit. La raie de la zircone tétragonale n'apparaît que de façon très discrète et en tous cas homogène sur toute l'épaisseur de la pièce.

Ce résultat cristallographique particulier nous paraît le signe d'un comportement plus "souple" en peau du produit AZS avec $K_2O$ qui lui permet de s'accommoder de la transformation allotropique spontanée zircone tétragonale $\rightarrow$ zircone monoclinique lors du refroidissement, alors que la phase tétragonale se trouve piégée par la solidification brutale et la rigidité des phases vitreuses des autres compositions.

Si la phase vitreuse avec $K_2O$, s'accommode de la transformation de la zircone, elle peut également supporter sans rigidité excessive et sans fissuration les contraintes diverses de solidification et de refroidissement.

Une autre façon de voir les choses consiste à considérer que la transformation zircone tétragonale $\rightarrow$ zircone monoclinique avec augmentation de volume entraîne des contraintes de compression en peau favorables pour minimiser l'apparition de fissures.

Cette hypothèse de contraintes de compression en peau est corroborée par des essais de traitement thermique de détensionnement sur pièces minces. La résistance mécanique en flexion du produit de référence AZS avec $Na_2O$ n'est quasiment pas modifiée après un séjour prolongé à 1100°C (très légère augmentation). Par contre la résistance mécanique du produit AZS avec $K_2O$ est nettement dégradée après un traitement thermique à 1100°C et rejoint celle du produit habituel. Ce résultat pourrait s'expliquer par la présence de contraintes de compression en peau du produit AZS avec $K_2O$, contraintes qui améliorent sa résistance en flexion mais disparaissent après traitement thermique.

Une autre particularité du produit fondu moulé AZS avec $K_2O$ a été trouvée par des études de transformation du produit à haute température. De petits échantillons de produits AZS avec $Na_2O$ sont portés à 1600°C pendant 7 heures puis trempés à l'eau froide. Il a été trouvé que le comportement de la phase vitreuse des deux produits est très différent dans ce type d'essai. Pour le produit témoin, la quantité de phase vitreuse augmente par dissolution d'alumine et de zircone et l'analyse évolue en conséquence. Pour le produit avec $K_2O$ la quantité de phase vitreuse et son analyse n'évoluent quasiment pas. Cette stabilité exceptionnelle de la phase vitreuse du produit AZS avec $K_2O$ révèle sa particularité et joue sans doute un rôle important lors de la solidification du produit.

Les exemples non limitatifs suivants sont donnés pour mieux illustrer l'invention.


## EXEMPLE 1

On introduit dans un four à arc type Héroult pour la fusion des oxydes une composition pulvérulente constituée de 49,9% d'alumine (contenant un peu de $Na_2O$), 47,6% de sable de zircon et 2,5% de carbonate de potassium. On a opéré dans des conditions oxydantes (arc long) comme décrit dans FR-A-1 208 577. Après fusion, l'analyse du produit coulé est la suivante : 50,1 % $Al_2O$, 32% $ZrO_2$, 16% $SiO_2$, 1,7% $K_2O$, 0,2% $Na_2O$, autres < 0,3% (à la précision d'analyse près).

Le produit fondu est coulé dans des moules en sable en grappes de dallettes. Des dallettes de dimensions : 120x120x8 mm permettent une bonne caractérisation mécanique du produit. Dans chaque dallette sont découpées 5 barrettes de dimensions 120x20x8 mm présentant chacune 2 grandes faces brutes de fonderie.

A titre de comparaison, un produit AZS de référence avec $Na_2O$ est coulé dans les mêmes conditions. La composition pulvérulente chargée dans le four contient 50,7% d'alumine, 47,6% de sable de zircon et 1,7% de carbonate de sodium. Après fusion, l'analyse du produit coulé est la suivante : 50,8% $Al_2O_3$, 32% $ZrO_2$, 16% $SiO_2$, 1,2% $Na_2O$ ; autres < 0,3%.

La comparaison de la résistance mécanique des éprouvettes 120x20x8 mm des 2 produits est d'abord réalisée selon une méthode classique des céramistes et réfractoristes : 30 éprouvettes de chaque produit sont rompues en flexion 3 points (entraxe 80 mm) avec une presse instrumentée, ce qui permet d'en déduire le module de rupture. Les résultats sont exprimés en résistance moyenne et écart-type.

|  | Résistance en flexion 3 points | Ecart type |
|---|---|---|
| Produit AZS – $Na_2O$ | 50 MPa | 10 MPa |
| Produit AZS – $K_2O$ | 120 MPa | 15 MPa |

La supériorité du produit selon l'invention apparaît très nettement sur la résistance mécanique moyenne.

Une approche mécanique plus fine peut être faite en flexion 4 points, en effet le volume sollicité dans l'éprouvette est alors plus grand, ce qui augmente les probabilités de trouver un défaut de grande taille.

Il a été montré que la dispersion des résistances mécaniques des céramiques se prête bien a l'analyse statistique de WEIBULL.

Cette analyse des résultats conduit à la détermination d'un paramètre m (module de WEIBULL), caractéristique de la dispersion de la résistance mécanique et donc de la taille des défauts critiques (m fort = faible dispersion).

Cette approche mécanique peut être complétée par des mesures du module d'élasticité. Deux méthodes dynamiques non destructives ont été retenues pour mesurer ce module : les ultra-sons et la fréquence de résonance.

Cette méthode plus fine a été appliquée à 30 éprouvettes 120x120x8 mm de chacun des produits. La résistance en flexion 4 points a été mesurée avec des entraxes de 50 et 100 mm et une montée en charge de 0,3 MPa/s.

Les résultats obtenus sont consignés dans le tableau ci-après :

| | Module d'Elasticité par Ultra-sons | Module d'Elasticité par fréquence de résonance | Module de Résistance en flexion 4 points | Module de WEIBULL |
|---|---|---|---|---|
| Produit AZS-Na$_2$O | 139 GPa | 103 GPa | 37 MPa | 5,9 |
| Produit AZS-K$_2$O | 176 GPa | 163 GPa | 57 MPa | 7,7 |

EP 0 334 689 B1

L'augmentation de la résistance mécanique en flexion 4 points du produit selon l'invention est moins importante qu'en flexion 3 points mais reste très nette. L'analyse statistique de WEIBULL confirme la moindre dispersion des résultats.

Le module d'élasticité est lié aux défauts des éprouvettes en céramique. La mesure par ultra-sons est plus sensible aux défauts de coeur alors que la mesure par fréquence de résonance est plus sensible aux défauts de peau particulièrement aux fentes. Les résultats confirment la moindre fissuration de peau du produit AZS avec $K_2O$.

EXEMPLE 2

Nous avons vu dans l'exemple précédent l'effet important de $K_2O$ en substitution quasiment totale de $Na_2O$. Nous avons également trouvé que l'effet favorable de l'ion potassium se fait sentir même si la substitution n'est que partielle.

Dans les mêmes conditions que l'exemple 1, nous avons coulé des produits ayant les compositions analysées :

|  | $Al_2O_3$ | $ZrO_2$ | $SiO_2$ | $Na_2O$ | $K_2O$ |
|---|---|---|---|---|---|
| Composition 1 (référence) | 50,8% | 32% | 16% | 1,2% | 0% |
| Composition 2 | 50,6% | 32% | 16% | 1,15% | 0,25% |
| Composition 3 | 50,3% | 32% | 16% | 0,4% | 1,3% |
| Composition 4 | 50,2% | 32% | 16% | 0,3% | 1,5% |
| Composition 5 (de l'exemple 1) | 50,1% | 32% | 16% | 0,2% | 1,7% |
| Composition 6 | 49,9% | 32% | 16% | 0,2% | 1,9% |

La résistance mécanique a été mesurée de façon simplifiée en flexion 3 points comme indiqué à l'exemple 1.

Les résultats sont regroupés dans le tableau suivant :

|  | Résistance en flexion 3 points |
|---|---|
| Composition 1 | 50 MPa |
| Composition 2 | 80 MPa |
| Composition 3 | 95 MPa |
| Composition 4 | 105 MPa |
| Composition 5 | 120 MPa |
| Composition 6 | 120 MPa |

EP 0 334 689 B1

Il apparaît clairement que même à très faible taux d'introduction l'ion potassium a un effet favorable sur la fissuration et donc sur la résistance mécanique.

Il apparaît également que la proportion optimum de $K_2O$ se situe, pour une composition donnée, quand le maximum d'ions sodium (par exemple, composition 5) est substitué par l'ion potassium. Au-delà (par exemple, composition 6) un excès de $K_2O$ n'apporte rien en résistance mécanique à froid.

## EXEMPLE 3

Les pièces minces AZS fondues moulées sont en général utilisées pour des applications anti-abrasion.

Il est intéressant de voir si l'on tire parti de la qualité de surface de la composition avec $K_2O$ du strict point de vue résistance à l'abrasion, indépendamment de l'aspect et de la résistance mécanique.

Nous avons utilisé la composition de référence, avec $Na_2O$, repéré "composition 1" dans l'exemple précédent et la composition citée à l'exemple 1 et repérée "composition 5" dans l'exemple précédent pour couler des dalles de dimensions 120x120x15 mm et 250x250x25 mm.

Ces formats de dalles sont susceptibles d'être utiles dans des applications anti-abrasion classiques (revêtement dans les circuits de transport du charbon par exemple).

La résistance à l'abrasion est appréciée par un test standardisé. Du corindon brun fondu (0,4-0,6 mm) est projeté à 60 m/s par une pression d'air de 2,8 bars sur le produit à tester avec un angle d'incidence de 45°. L'indice de résistance est calculé à partir de la perte de volume rapportée à celle d'un étalon sur la base de trois projections d'un kilogramme d'abrasif au minimum.

Les résultats d'abrasion sur les dalles 120x120x15 mm sont les suivants :

| | Indice de résistance en peau | Indice de résistance à 5 mm de la peau |
|---|---|---|
| Composition 1 (AZS+Na$_2$O) | 121 | 82 |
| Composition 5 (AZS+K$_2$O) | 157 | 78 |

Les résultats du test d'abrasion sur les dalles 250x250x25 mm sont les suivants :

| | Indice de résistance en peau | Indice de résistance à 8 mm de la peau |
|---|---|---|
| Composition 1 (AZS-Na$_2$O) | 126 | 81 |
| Composition 5 | 147 | 73 |

Il ressort de ces résultats que la qualité de peau du produit AZS-$K_2O$ a un effet sensible sur la résistance à l'abrasion.

9

L'amélioration par rapport au produit de référence semble d'autant plus nette que la pièce est mince. L'amélioration est cependant superficielle puisqu'elle n'est absolument pas sensible au 1/3 de l'épaisseur des dalles.

EXEMPLE 4

Un des avantages des compositions AZS-Na$_2$O est leur aptitude au moulage à l'état fondu qui permet l'obtention de pièces minces complexes très utiles pour la réalisation d'ensembles spéciaux pour applications anti-abrasion ou autres.

Il est important de savoir si la composition AZS-K$_2$O conserve cet avantage de mise en forme en pièces complexes en gardant ses avantages spécifiques concernant la qualité de la peau.

Nous avons retenu la composition de référence repérée 1 dans les exemples précédents et la composition AZS-K$_2$O repérée 5.

Nous avons fondu ces compositions au four Héroult habituel et coulé le produit dans des moules en sable pour l'obtention de pièces spéciales en forme de disques destinés à une utilisation en broyeur humide à microéléments. Ces disques servent à la mise en mouvement des agents broyants dans la composition à broyer ou à disperser et sont donc sollicités au point de vue mécanique et du point de vue résistance à l'abrasion.

Les disques que nous avons réalisés sont des pièces de 200 mm de diamètre externe de 15 mm d'épaisseur en moyenne (épaisseur non constante : présence de ressauts) avec un trou central pour le moyeu et des trous périphériques pour le passage de la charge.

La comparaison des pièces obtenues avec les compositions 1 et 5 montre des comportements très voisins : même rendement dans des conditions identiques, même sensibilité aux déréglages (températures de coulée, conditions de refroidissement....). Il apparaît cependant systématiquement un meilleur aspect de peau des pièces obtenues avec la composition 5 (AZS-K$_2$O).

Cette observation peut être confirmée à l'aide d'un contrôle par ressuage permettant de révéler avec un liquide adéquat les défauts de surface. Une fissuration en toile d'araignée apparaît nettement avec la composition 1 alors que très peu de fissures sont mises en évidence avec la composition 5.

La fréquence de résonance est un autre moyen qui peut être utilisé comme contrôle non destructif d'une pièce mince. Dans le cas d'une pièce complexe, comme le disque que nous avons décrit, il n'est pas possible de déduire le module d'élasticité de la mesure de fréquence. Mais à géométrie identique, le résultat brut de fréquence de résonance permet de classer les pièces d'après leur fissuration. Les 16 disques réalisés avec la composition 1 donnent une fréquence de résonance moyenne de 4250 Hz contre 4870 Hz pour les 16 disques réalisés avec la composition 5. En outre si l'on classe les 32 disques par ordre de fréquence croissante, on trouve en tête 13 disques correspondant à la composition AZS-K$_2$O.

La supériorité des disques coulés avec la composition selon l'invention a pu également être mise en évidence par le test d'abrasion décrit à l'exemple 3. L'indice de résistance à l'abrasion en peau des disques AZS-K$_2$O a été trouvé égal à 175 contre 129 pour la composition AZS-Na$_2$O.

L'ensemble de ces résultats montre clairement la supériorité de la composition selon l'invention par rapport au produit de référence fondu moulé en pièces minces y compris en pièces complexes.

EXEMPLE 5

Dans tous les exemples précédents la fusion de la composition et l'élaboration du bain fondu AZS au four électrique ont été faites dans les conditions les plus oxydantes recommandées par FR-A-1 208 577 et ses additions.

Cette méthode moderne de fusion en arc est actuellement généralisée pour ce type de composition.

Les compositions des exemples précédents ont toutes été réalisées avec des matières premières relativement pures (alumine métallurgique, zircon d'Australie) permettant d'assurer sur le produit fini :

$$MgO + CaO + Fe_2O_3 < 0,2\%$$

Là encore cette pratique de limitation des impuretés correspond à la méthode moderne de fabrication des réfractaires électrofondus.

Il nous a paru cependant intéressant de vérifier l'incidence de l'oxyde alcalin K$_2$O sur un produit AZS élaboré selon la méthode ancienne (électrodes graphite immergées conduisant à un produit tel que décrit par SANDMEYER dans US-A-2 903 373, page 2, ligne 60) et avec une composition contenant les impuretés des premiers produits électrofondus AZS (MgO, CaO, Fe$_2$O$_3$).

Nous avons donc coulé dans ces conditions un produit présentant l'analyse chimique suivante :

EP 0 334 689 B1

| | $Al_2O_3$ | $ZrO_2$ | $SiO_2$ | $Na_2O$ | $K_2O$ | MgO | CaO | $Fe_2O_3$ |
|---|---|---|---|---|---|---|---|---|
| Compo. 7 | 48,2% | 32% | 16% | 0,2% | 1,9% | 0,7% | 0,5% | 0,5% |

Cette composition ne diffère de la composition 6 de l'exemple 2 que par la présence des impuretés (MgO, CaO, $Fe_2O_3$) et l'élaboration réductrice.

Nous avons également comparé la composition 7 à un produit réduit avec impuretés mais contenant l'oxyde alcalin $Na_2O$ habituel (produit fondu moulé AZS ancien) :

| | $Al_2O$ | $ZrO_2$ | $SiO_2$ | $Na_2O$ | $K_2O$ | MgO | CaO | $Fe_2O_3$ |
|---|---|---|---|---|---|---|---|---|
| Compo. 8 | 49,1% | 32% | 16% | 1,2% | 0% | 0,7% | 0,5% | 0,5% |

La résistance mécanique en flexion trois points sur éprouvettes 120x20x8 mm conduit au résultat suivant :

| | Résistance en flexion 3 points |
|---|---|
| Compo. 6 (rappel) | 120 MPa |
| Compo. 7 | 90 MPa |
| Compo. 8 | 50 MPa |

Ce résultat montre clairement que le produit AZS ancien (composition 8, réduite avec impuretés) est comparable au produit standard actuel (composition 1) sur le plan de la résistance mécanique en pièce mince.

L'utilisation de l'oxyde alcalin $K_2O$ avec la même élaboration et les mêmes impuretés (composition 7) conduit à une amélioration significative que confirme l'aspect peu fissuré de la peau.

L'élaboration réductrice et les impuretés ne permettent pas cependant d'atteindre la qualité de surface en pièces minces du produit AZS avec $K_2O$ élaboré de façon oxydante et sans impuretés (composition 6).

EXEMPLE 6

On répète l'exemple 1 si ce n'est que les plaquettes obtenues ont la composition analysée suivante (forte teneur en zircone) : 45,5% $Al_2O_3$ + 41% $ZrO_2$ + 12,2% $SiO_2$ + 1,0% $Na_2O$ (autres < 0,3%) et sur la même composition que ci-dessus mais avec introduction de 0,5% de $K_2O$. L'aspect des pièces coulées et leur résistance mécanique sont bien meilleurs dans le cas de la composition contenant du $K_2O$.

EXEMPLE 7

On répète l'exemple 1 si ce n'est que les plaquettes obtenues ont la composition analysée suivante (forte teneur en corindon) : 72,5% $Al_2O_3$ + 21% $ZrO_2$ + 5,8% $SiO_2$ + 0,5% $Na_2O$ (autres < 0,2%) et sur la même composition que ci-dessus mais avec ajout de 0,5% de $K_2O$. L'aspect des pièces coulées et leur résistance mécanique sont bien meilleurs dans le cas de la composition contenant du $K_2O$.

11

**Revendications**

1. Pièce en matériau céramique mise en forme par fusion et moulage d'une composition à base d'alumine, de zircone, de silice et d'un oxyde de métal alcalin, ladite pièce étant formée de phases cristallines de corindon et de zircone et d'une phase vitreuse, présentant, sur au moins une de ses parties, une épaisseur inférieure ou égale à 30 mm et étant destinée à une application où la résistance mécanique et/ou la résistance à l'abrasion ont une importance primordiale, caractérisée en ce qu'elle a la composition chimique suivante, en % en poids sur la base des oxydes :

$$
\begin{array}{lll}
Al_2O_3 & : 40 & - 75 \\
ZrO_2 & : 20 & - 45 \\
SiO_2 & : 5 & - 20 \\
Na_2O & : 0 & - 2,7 \\
K_2O & : 0,15 & - 4,25 \\
Fe_2O_3+TiO_2+CaO+MgO & : 0 & - 0,3,
\end{array}
$$

le rapport pondéral

$$\frac{Na_2O + K_2O/1,52}{SiO_2}$$

étant compris entre 0,07 et 0,14 inclusivement, et en ce que la zircone est principalement sous forme monoclinique du coeur jusqu'à la peau.

2. Pièce selon la revendication 1, caractérisée en ce que la proportion de $Na_2O$ est de 0 à 1,20% en poids et la proportion de $K_2O$ est de 0,25 à 2% en poids.

3. Pièce selon la revendication 1 ou 2, caractérisée en ce qu'elle est un disque de microniseur.

4. Pièce selon l'une quelconque des revendications 1 à 3, caractérisée en ce qu'elle est une pièce d'usure de pompe pour liquide chargé.

5. Pièce selon l'une quelconque des revendications 1 à 3, caractérisée en ce qu'elle est une dalle de revêtement anti-abrasif.


**Patentansprüche**

1. Bauteil aus keramischem Material, das durch Schmelzen und Vergiessen einer Verbindung auf der Basis von Aluminiumoxyd, Zirconiumdioxyd, Kieselerde und einem Alkalimetalloxid hergestellt ist, wobei das Bauteil aus kristallinen Phasen des Korund und Zirconiumdioxyd und einer Glasphase gebildet ist, an mindestens einem seiner Abschnitte eine Dicke aufweist, die kleiner oder gleich 30 mm ist, und für Anwendungszwecke bestimmt ist, bei denen die mechanische Festigkeit und/oder die Abriebfestigkeit von primordialer Bedeutung sind, dadurch gekennzeichnet, dass es die folgende chemische Zusammensetzung, in Gewichtsprozent auf der Basis der Oxide, hat :

$$
\begin{array}{lll}
Al_2O_3 & : 40 & - 75 \\
ZrO_2 & : 20 & \quad 45 \\
SiO_2 & : 5 & - 20 \\
Na_2O & : 0 & - 2,7 \\
K_2O & : 0,15 & - 4,25 \\
Fe_2O_3+TiO_2+CaO+MgO & : 0 & - 0,3,
\end{array}
$$

wobei das Gewichtsverhältnis

$$\frac{Na_2O + K_2O/1.52}{SiO_2}$$

zwischen 0,07 und 0,14 einschliesslich liegt, und dass das Zirconiumdioxyd hauptsächlich in monokliner Form

**12**

vom Kern bis zur Aussenseite vorliegt.

2. Bauteil nach Anspruch 1, dadurch gekennzeichnet, daß der Anteil an $Na_2O$ von 0 bis 1,20 Gewichtsprozent und der Anteil an $K_2O$ von 0,25 bis 2 Gewichtsprozent beträgt.

3. Bauteil nach Anspruch 1 oder 2, dadurch gekennzeichnet, daß es eine Feinstmahlscheibe ist.

4. Bauteil nach einem der Ansprüche 1 bis 3, dadurch gekennzeichnet, daß es ein Gebrauchsteil einer Pumpe für belastete Flüssigkeit ist.

5. Bauteil nach einem der Ansprüche 1 bis 3, dadurch gekennzeichnet, daß es eine abriebfeste Deckplatte ist.

**Claims**

1. Article made of ceramic material produced by fusing and casting in a mold a composition based on alumina, zirconia, silica and an alkali metal oxide, said article consisting of crystalline corundum and zirconia phases and of a vitreous phase, and having, in at least one of its parts, a thickness lower than or equal to 30 mm and being intended for an application where mechanical strength and/or abrasion resistance are of primary importance, characterized in that it has the following chemical composition, in % by weight based on the oxides :

| | | | | |
|---|---|---|---|---|
| $Al_2O_3$ | : | 40 | – | 75 |
| $ZrO_2$ | : | 20 | – | 45 |
| $SiO_2$ | : | 5 | – | 20 |
| $Na_2O$ | : | 0 | – | 2.7 |
| $K_2O$ | : | 0.15 | – | 4.25 |
| $Fe_2O_3+TiO_2+CaO+MgO$ | : | 0 | – | 0.3 |

the weight ratio

$$\frac{Na_2O + K_2O/1.52}{SiO_2}$$

being between 0.07 and 0.14 inclusive, and in that said zirconia is substantially in monoclinic form from the core to the skin.

2. Article according to claim 1, characterized in that the proportion of $Na_2O$ is from 0 to 1.20 % by weight and the proportion of $K_2O$ is from 0.25 to 2 % by weight.

3. Article according to claim 1 or 2, characterized in that it is a micronizer disc.

4. Article according to any of claims 1 to 3, characterized in that it wear component of a pump for a liquid containing solids.

5. Article according to any of claims 1 to 3, characterized in that it is an antiabrasive coating slab.